# EUROPEAN PATENT SPECIFICATION

(11) **EP 0 637 773 B1**
(45) Date of publication and mention of the grant of the patent: **10.05.2000**
(21) Application number: 94112131.1
(22) Date of filing: 03.08.1994
(51) Int. Cl.: G02F 1/139

(54) **Liquid crystal display device**
Flüssigkristall-Anzeigevorrichtung
Dispositif d'affichage à cristal liquide

(30) Priority: 04.08.1993 JP 19374193
(43) Date of publication of application: 08.02.1995
(73) Proprietor: SHARP KABUSHIKI KAISHA, Osaka-shi, Osaka-fu 545-0013 (JP)
(72) Inventor: Takagi, Minoru, Daito-shi, Osaka (JP); Ohnishi, Hiroshi, Nara-shi, Nara (JP)
(74) Representative: Müller, Frithjof E., Dipl.-Ing.

(56) References cited:
- EP-A- 0 368 554
- US-A- 4 541 693
- PATENT ABSTRACTS OF JAPAN vol. 013, no. 527 (P-965) 24 November 1989 & JP-A-01 216 318 (ALPS ELECTRIC CO LTD) 30 August 1989
- PATENT ABSTRACTS OF JAPAN vol. 011, no. 340 (P-634) 7 November 1987 & JP-A-62 123 405 (SUMITOMO CHEM CO LTD) 4 June 1987
- PATENT ABSTRACTS OF JAPAN vol. 011, no. 354 (P-638) 19 November 1987 & JP-A-62 133 427 (TOSHIBA CORP) 16 June 1987
- PATENT ABSTRACTS OF JAPAN vol. 013, no. 131 (P-850) 31 March 1989 & JP-A-63 301 023 (RICOH CO LTD) 8 December 1988

## Description

### BACKGROUND OF THE INVENTION

### 1. Field of the Invention

The present invention relates to a twisted nematic (hereinafter described as "TN") type liquid crystal display device, which is preferably applied to black-and-white display means of various equipment mounted on vehicles.

### 2. Description of the Related Art

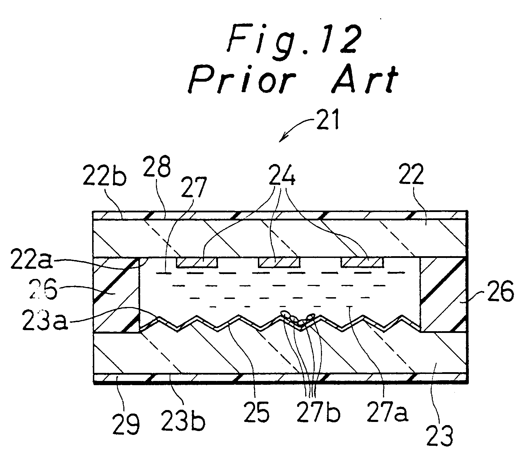

Fig. 12 is a sectional view illustrating the constitution of a liquid crystal display device 21 of the prior art. The liquid crystal display device 21 comprises light transmitting substrates 22, 23, transparent electrodes 24, 25, an adhesive material 26, a liquid crystal layer 27 and polarizing plates 28, 29. The light transmitting substrates 22, 23 (e.g., made of glass) are disposed so that one surface 22a of the light transmitting substrate 22 and one surface 23a of the transmitting substrate 23 are opposed to each other. The liquid crystal layer 27 is interposed between the substrates 22, 23, which are bonded by the adhesive material 26. At least the transparent electrodes 24 are formed on the inner surface of any one of the two substrates 22, 23. Herein, for convenience of explanation, the substrate 22 is considered as one substrate where the transparent electrodes 24 are formed and the surface 22a is considered as the inner surface. The transparent electrodes 24 are of, for example, a segment type shaping a character. On the other hand, irregularities are formed on the entire of the inner surface 23a of the other substrate 23 and besides the transparent electrode 25 is formed thereon. The transparent electrode 25 is a common electrode which is formed, for example, on the entire of the inner surface 23a of the substrate 23.

Orientation treatment is applied to the inner surface 22a of the substrate 22 on which the transparent electrode 24 are formed and to the surface of the transparent electrode 25. The orientation treatment includes rubbing treatment of a surface coated with an organic material (e.g., polyimide resin) and formation of an inorganic film by oblique evaporation coating. Liquid crystal molecules 27a of the liquid crystal layer 27 are oriented in a predetermined direction by the orientation treatment. Further, liquid crystal molecules 27b which are the closest to the irregular surface 23a of the substrate 23 are oriented along the irregularities in one direction as shown in Fig. 12. The polarizing plates 28, 29 are arranged on the other surfaces 22b, 23b of the substrates 22, 23, respectively.

The above-mentioned liquid crystal display device 21, which is disclosed in the Japanese Unexamined Patent Publication (KOKAI) No. JP-A 61-137132 (1986), prevents a coloring phenomenon caused by thickness ununiformity of the liquid crystal layer 27 and color change in relation to a viewing angle. Generally, a TN-type liquid crystal display device is used as display means for displaying a black-and-white image applied to various equipment mounted on vehicles, and in particular, a transmissive type is preferably applied. In the transmissive-type liquid crystal display device, displaying is carried out by controlling the light entered into a liquid crystal layer from a back light and coloring is caused by the thickness ununiformity of the liquid crystal layer. Additionally, though a black-and-white image of high purity can be displayed at a viewing angle of 0° , the color of the image changes gradually with the increase of the viewing angle. Particularly, it is very disadvantageous that a little different red color is easily caused when a color character should be displayed by virtue of a color background in a specific position of an image plane. For example, when a red color background is employed by using a backlight of red color group, an unclear reddish character is displayed.

In the case of the above-mentioned liquid crystal display device 21, the coloring phenomenon and color change is prevented by forming irregularities on the surface 23a of the substrate 23. More specifically, since spectrums of almost all colors are caused by virtue of the irregularities, the displayed color is recognized as neutral gray color due to additive color mixture by an observer. Further, the color change in relation to the visual angle is prevented.

However, since a great number of irregularities are formed on the surface 23a of the substrate 23 of the liquid crystal display device 21, defective orientation, so-called domain, is caused by turbulence of the orientation of the liquid crystal molecules 27b closest to the surface 23a. That results in great deterioration of the display image quality. The display image becomes unclear because of the decrease of contrast ratio. In the liquid crystal display device 21, a substrate material such as ground glass is employed in order to meet a requirement that irregularities be formed on the surface 23a of the substrate 23. The ground glass applied thereto is expensive in comparison with a ground glass used in general. Therefore, that causes an increase in manufacturing cost of the liquid crystal display device 21.

EP-A-0 368 554 relates to a twisted nematic liquid crystal display device comprising a first transparent electrode which has been subjected to orientation treatment in a first direction, a second transparent electrode which has been subjected to orientation treatment in a second direction, a liquid crystal located between said first and second electrodes, a first transparent polarizing plate having a direction of polarization coinciding with the first direction and located outside the first electrode and a second transparent polarizing plate having a direction of polarizing coinciding with the first direction and located outside the second electrode. whereby, when no voltage is applied between the two electrodes, light incident on the first polarizing plate is not able to pass through the liquid crystal layer due to the twisted orientation through 90° of the major axes of the molecules of said liquid crystal layer, and, whereby, when an excitation voltage is applied between the two electrodes the major axes of the molecules of the liquid crystal layer are re-oriented so as to lie parallel to the electric field and light incident on the first polarizing plate is able to pass through the liquid crystal layer and out through the second polarizing plate, wherein the optical path length difference of the liquid crystal layer which is equal to the product of the thickness of the liquid crystal layer and the double refraction index of the liquid crystal layer has a value such that 1,4 µm ≤ Δn d ≤ 1.7 µm.

JP-A-1216318 discloses a liquid crystal display device having a high contrast, a wide visual angle and a more achromatic colour by setting a retardation, i.e. a value of d Δ n to a range of ≥ 1.4 and ≤ 2,2 and a twist angle to a specific range.

JP-A-63301023 discloses the addition of a blue dichroic dye to the liquid crystal composition. However, the addition is intended to improve the purity of blue colour in a blue display mode. The colour change around blue due to changes in the retardation is compensated by adding the blue dye. Specifically, where colouring occurs because of retardation (for example, a blue mode), the dye is added to further improve the blue colour. The use of a blue dichroic dye as opposed to a simple blue dye provides for a higher contrast.

JP-A-62123405 discloses the inclusion (by absorption) of a blue dichroic dye in a polarizer. The disclosure is therefore not relevant to the present device.

An object of the invention is to provide a liquid crystal display device of improved image quality using a substrate without irregularities.

The invention provides a liquid crystal display device according to the features of the appended claim 1.

It was found that in the liquid crystal display device, the color change in relation to a viewing angle is relatively small, and coloring due to the ununiformity of the liquid crystal layer thickness d is hardly caused. Additionally, it is possible to solve the inferior orientation of the liquid crystal molecules, which is caused by irregularities of a substrate, because unlike the prior art, the lowering of color change and coloring can be obtained using a substrate without irregularities.

Furthermore, since a relatively expensive substrate such as ground glass is not necessary, a liquid crystal display device of an improved image quality can be economically manufactured.

Additionally, when the product d·Δn is selected from the values in the range of from 1.85 to 1.95 µm, more improved characteristics are obtainable. In particular, when the product d·Δn is 1.888 µm, the angle α is set to be 0° , and the angle β is set to be 90° , the most improved characteristics are obtainable.

Moreover, according to the invention, each of the pair of polarizing plates comprises a polarizer containing a dyestuff. Since the polarizer is superior to a polarizer containing iodine in thermal resistance, the discolorization of the polarizer due to the use thereof at a relatively higher temperature can be prevented. Accordingly, even when the liquid crystal device is applied to equipment mounted on vehicles, excellent display characteristics can be maintained.

Further, according to the invention, the liquid crystal layer contains 0.4 to 0.8% pleochroic dye of a blue type. The refractive anisotropy Δn of the liquid crystal molecules depends on temperature, namely the refractive anisotropy decreases in correspondence with temperature changes. Consequently, the product d·Δn is deviated from the value predetermined. As a result of the deviation of the product d·Δn, the displayed color becomes reddish and the display quality is degraded. However, it was demonstrated that such deviation of color is prevented by adding the pleochroic dye of a blue type to the liquid crystal material to be used for the liquid crystal layer, even when the product d·Δn is deviated with temperature changes. Consequently, that makes it possible to economically provide a liquid crystal display device of improved display quality. Additionally, a liquid crystal display device with little degradation of display characteristics with temperature changes can be obtained.

In this case of a pleochroic dye addition of between 0.4 to 0.8%, the color deviation is further prevented. In particular, the color deviation most hardly occurs in 0.8% addition of the pleochroic dye.

Further, according to the invention, azo- and anthraquinone dye molecules can be used as the blue-type pleochroic dye. In particular, a pleochroic dye having a relatively high dichroism ratio is preferable in order to enhance the contrast ratio.

### BRIEF DESCRIPTION OF THE DRAWINGS

Other and further objects, features, and advantages of the invention will be more explicit from the following detailed description taken with reference to the drawings wherein:
Fig. 1 is a sectional view showing the constitution of a liquid crystal display device 1 of an example not according to the invention;
Fig. 2 is a diagram showing a positional relationship of respective composing members of the liquid crystal display device 1;
Fig. 3 is a diagram showing a relationship between the product d·Δn of a liquid crystal layer thickness d and a retractive anisotropy Δn of liquid crystal molecules and a color difference ΔE;
Fig. 4 is a chromaticity diagram with the change of the product d·Δn at a viewing angle θ of 0° ;
Fig. 5 is a chromaticity diagram with the change of the product d·Δn at a viewing angle θ of 25° ;
Fig. 6 is a chromaticity diagram with the change of the product d·Δn at a viewing angle θ of 50° ;
Fig. 7 is a chromaticity diagram in a direction of 12 to 6 o'clock in the liquid crystal display device 1;
Fig. 8 is a chromaticity diagram in a direction of 9 to 3 o'clock in the liquid crystal display device 1;
Fig. 9 is a chromaticity diagram in a direction of 12 to 6 o'clock in a liquid crystal display device of the embodiment of the invention;
Fig. 10 is a chromaticity diagram in a direction of 9 to 3 o'clock in the liquid crystal display device of the embodiment of the invention;
Fig. 11 is a chromaticity diagram for liquid crystal display device with different addition amounts of pleochroic dyes of a blue type; and
Fig. 12 is a sectional view illustrating a constitution of a liquid crystal display device 21.

### DETAILED DESCRIPTION OF THE INVENTION

Now referring to the drawings, the preferred embodiment of the invention is described below.

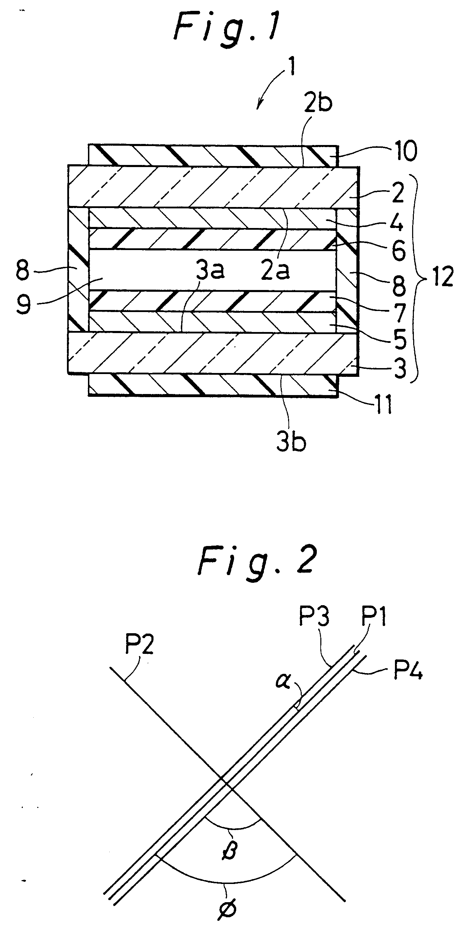

Fig. 1 is a sectional view showing the constitution of a liquid crystal display device 1 of an example not according to the invention. The liquid crystal display device 1 comprises polarizing plates 10, 11 and a liquid crystal display element 12, which is disposed between the polarizing plates 10, 11. The liquid crystal display element 12 comprises light transmitting substrates 2, 3, transparent electrodes 4, 5, orientation films 6, 7, an adhesive material 8 and a liquid crystal layer 9. The transparent electrode 4 and the orientation film 6 are formed so as to be laminated in this order on one surface 2a of the light transmitting substrate 2 (e.g., made of glass). Identically, the transparent electrode 5 and the orientation film 7 are formed so as to be laminated in this order on one surface 3a of the light transmitting substrate 3 (e.g. made of glass) . The transparent electrodes 4, 5 are made of, for example, indium tin oxide (ITO). The orientation films 6, 7 are made of, for example, polyimide resin, and have a surface to which orientation treatment such as rubbing treatment is applied.

The substrates 2, 3 are disposed so that the surfaces 2a, 3a are opposed to each other, and bonded by the adhesive agent 8. A twisted nematic liquid crystal material to be used as the liquid crystal layer 9 is injected between the substrates 2, 3 through an injection hole for injecting the liquid crystal and thereafter the injection hole is sealed. Additionally, the arrangement of the substrates 2, 3 and the selection of a liquid crystal material are conducted so that the twist angle φ of liquid crystal molecules between the substrates 2, 3 becomes 90° . The product d·Δn of the thickness d of the liquid crystal layer 9 and the refractive anisotropy Δn of the liquid crystal molecules is selected from values in the range of from 1.80 to 2.00 µm and preferably to be in the range of from 1.85 to 1.9 µm. In this example, the thickness d of the liquid crystal layer 9 and the refractive anisotropy Δn are 9.5 µm and 0.1987, respectively. Consequently the product d·Δn amounts to 1.888 µm, which is the most preferable. Preferably, a material having a phase transition temperature (Tni) of 100°C is used as a liquid crystal material. Thereby, the change of Δn (d·Δn) due to the change of temperature can be controlled.

The above-mentioned liquid crystal display element 12 is disposed between the polarizing plates 10, 11. An example of the disposition is that the polarizing plate 10 is bonded on the other surface 2b of the substrate 2 and the polarizing plate 11 is bonded on the other surface 3b of the substrate 3. The polarizing plates 10, 11 are realized, for example, by a material having a simple substance transmittance of 40% and a polarization of 99.5% or more which is selected from a group of dyestuff materials having a long durability. Giving a concrete example of the polarizing plate, those under the trade names "HC2-61-18S of SANRITZ K.K. and "SF-1822AP" of Sumitomo Chemical Co., Ltd. can be named. By using a polarizing plate with such properties, discoloring in an iodine-type polarizing plate, which usually occurs in the environment of a relatively high temperature, can be prevented. Accordingly, the image quality can be prevented from degrading.

Fig. 2 is a diagram showing a positional relationship of respective composing members of the liquid crystal display device 1.

Continuous lines P1, P2, P3, P4 show the orientation axis of the liquid crystal molecules closest to the substrate 2, the orientation axis of the liquid crystal molecules closest to the substrate 3, the absorption axis of the polarizing plate 10 and the absorption axis of the polarizing plate 11, respectively. The angle α shows an angle contained by the orientation axis P1 of the liquid crystal molecules closest to the substrate 2 and the absorption axis P3 of the polarizing plate 10, and the angle β shows an angle contained by the orientation axis P2 of the liquid crystal molecules closest to the substrate 3 and the absorption axis P4 of the polarizing plate 11. Further, the angle φ shows an angle contained by the orientation axis P1 and the orientation axis P2, that is the twist angle φ. In the example, the angle α , β and φ were preset to be 0° , 90° , and 90° , respectively.

Furthermore, the angle α is preset to be in the range of from -5 to 5° based on the orientation axis P1 of the liquid crystal molecules closest to the substrate 2, and the angle β is preset to be in the range of from 85 to 95° based on the orientation axis P2 of the liquid crystal molecules closest to the substrate 3. Since the above mentioned product d·Δn and the angles α , β , φ have operational relations with each other, the desired effect can not be obtained if even one of the preset values is out of the above-mentioned range.

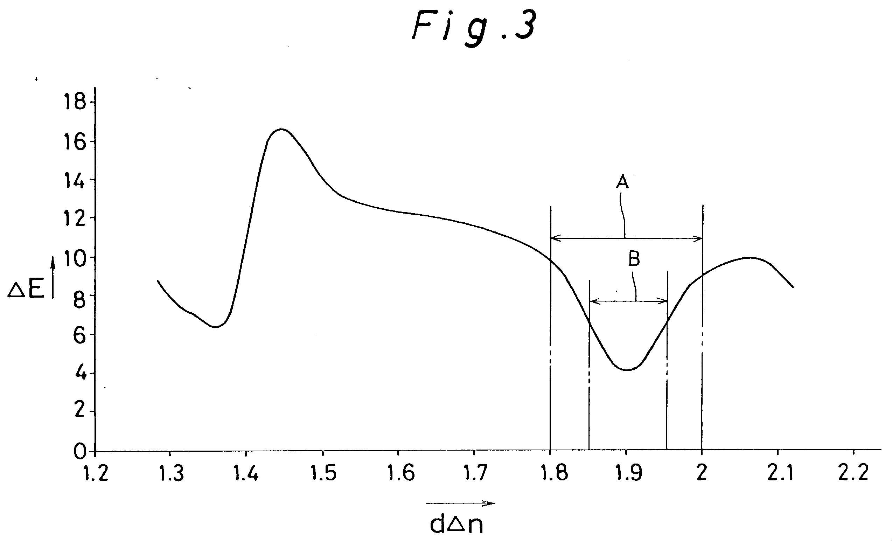

Fig. 3 is a diagram showing a relationship between d·Δn and a color difference ΔE. When the image plane is viewed from a direction perpendicular to the image plane, the viewing angle θ is assumed to be 0° . The color difference ΔE was evaluated in a viewing angle direction having the greatest color difference among viewing angle directions in a range of from 0° to 50° . It is estimated that the color difference ΔE will become small when the product d·Δn is selected from values in the range of from 1.80 to 2.00 µm (A), in particular, from 1.85 to 1.95 µm (B), and therefore the color change of an image will become small , because the color difference ΔE comes to the smallest when the product d·Δn is 1.9 µm.

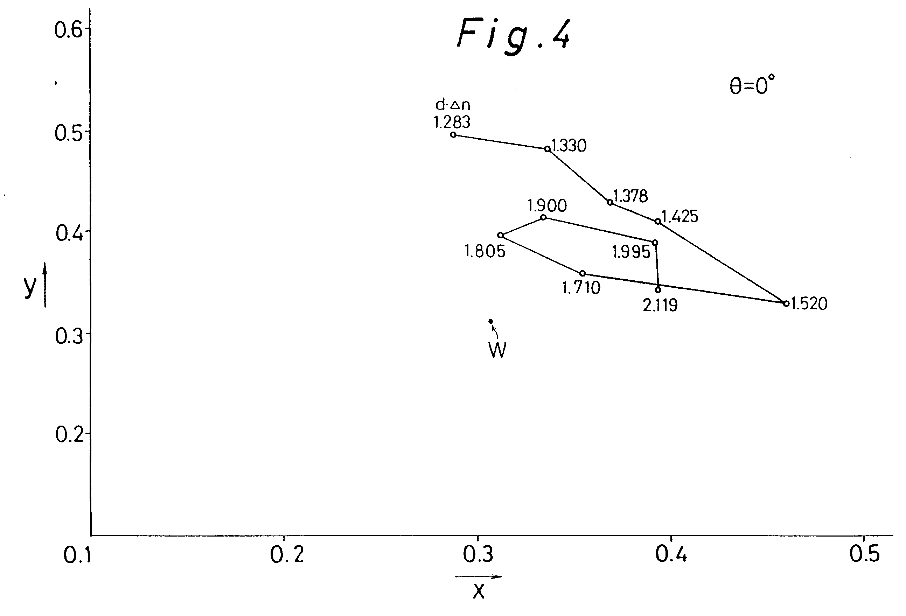

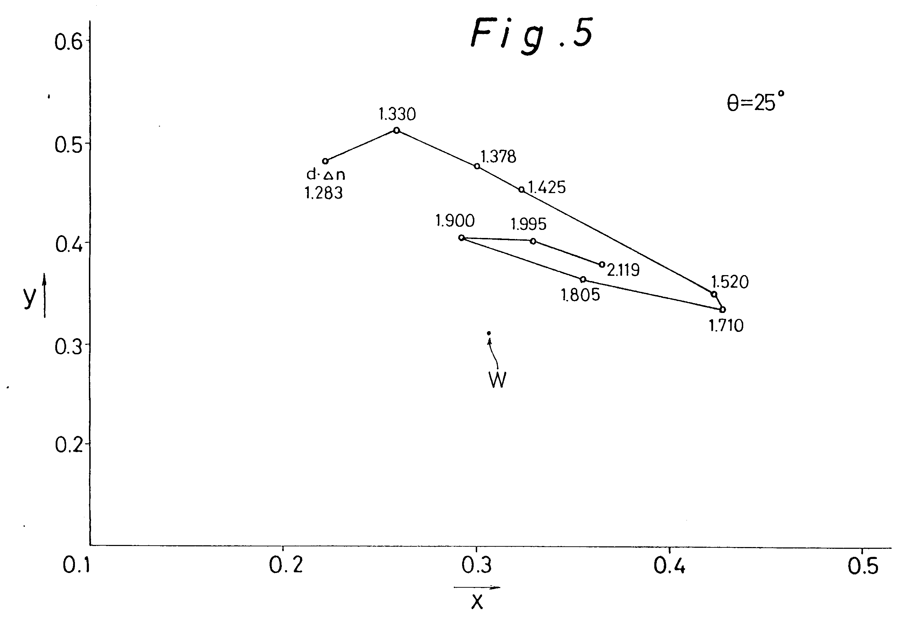

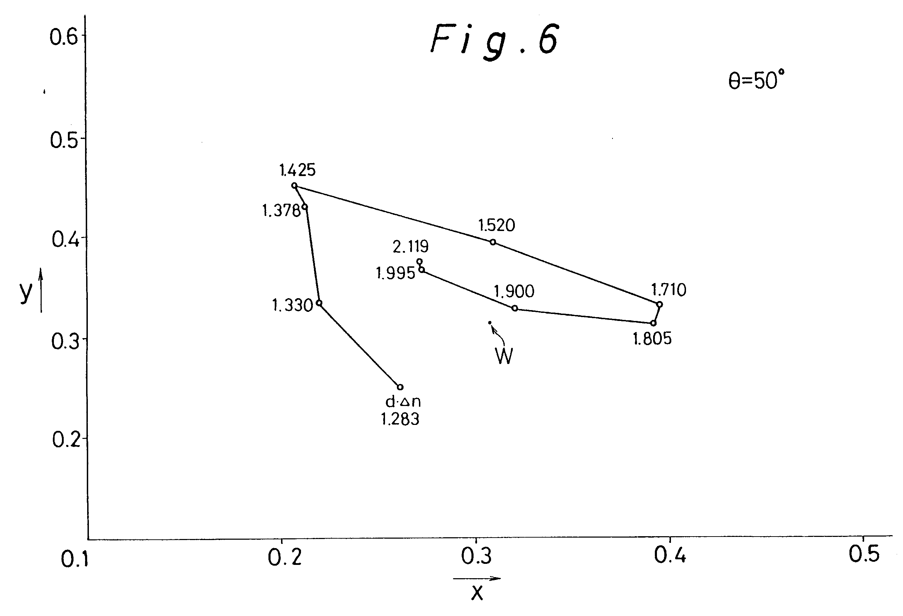

Figs. 4-6 are chromaticity diagrams with the change of the product d·Δn of a liquid crystal layer thickness d and a liquid crystal molecule refractive anisotropy Δn at viewing angles θ of 0° , 25° , and 50° , respectively. A point W indicates a white point (x=0.31, y=0.31). Namely, the nearer to the point W the position is, the more achromatic the color therein is, The position nearer to the point W is preferred for the purpose of restraining the color change and the product d·Δn of the position close to the point W is in the range of the product d·Δn of the embodiment as shown in Figs. 4-6.

In the following, evaluation results of display properties of a prepared liquid crystal display device 1 will be described.

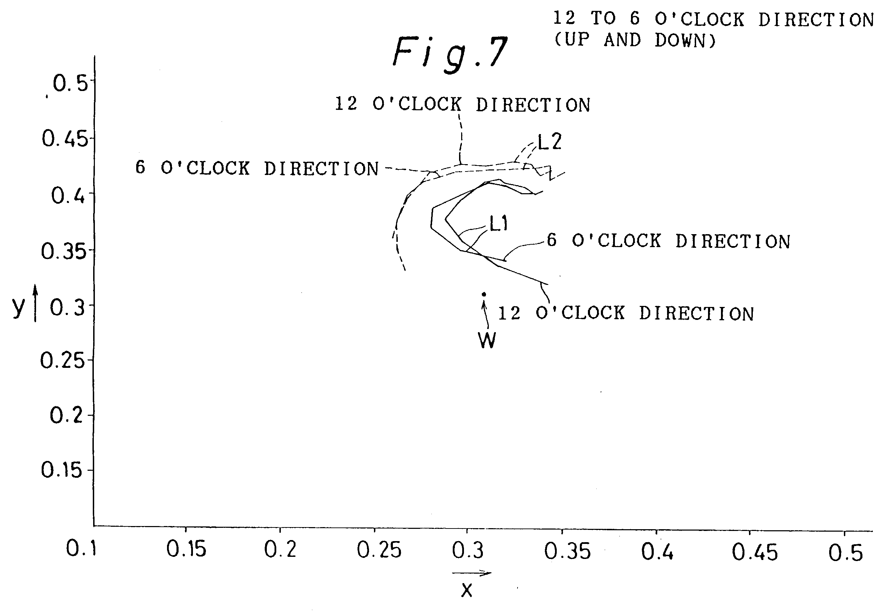

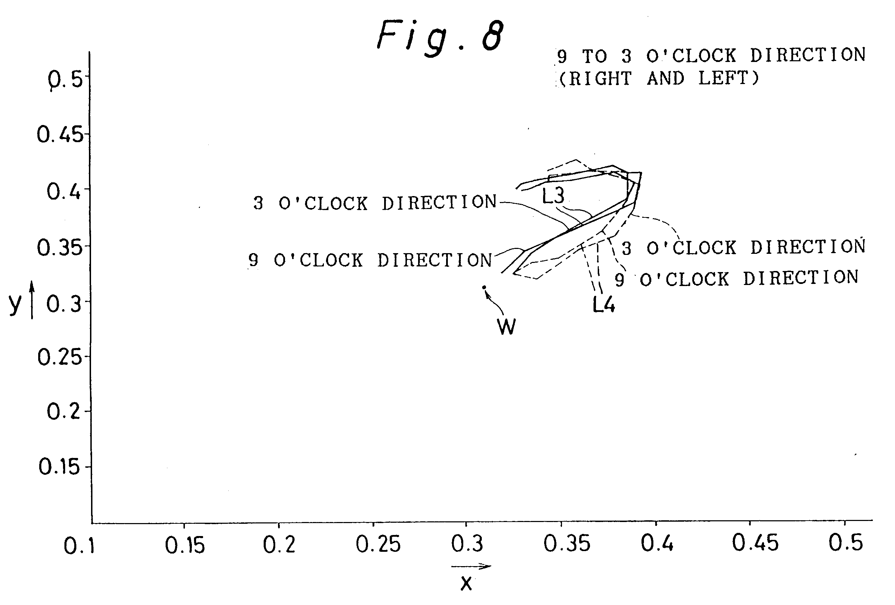

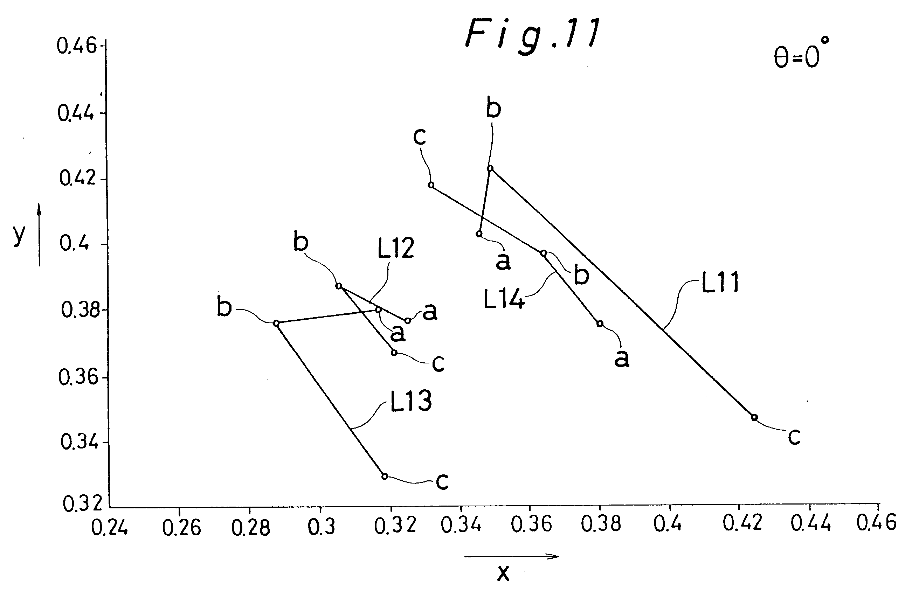

A back light (e.g., realized by a tungsten lamp) is disposed, for example, on a side opposite to the liquid crystal display element 12 of the polarizing plate 11 and color changes between the directions of 12 to 6 o'clock (up and down direction) and 9 to 3 o'clock (right and left direction) were measured. Fig. 7 is a chromaticity diagram in the direction of 12 to 6 o'clock and Fig. 8 is that in the direction of 9 to 3 o'clock. Continuous lines L1, L3 represent the results of the liquid crystal display device 1 and dashed lines L2, L4 represent the results of a liquid crystal display device for a comparative example. The liquid crystal display device for a comparative example is provided with substrates having irreguralities as shown in Fig. 11.

The region where both of X- and Y-coordinates are above those of the white point W represents the region of colors belonging to a yellow color group. On the contrary, the region where both of X and Y coordinates are below those of the white point W represents the region of colors belonging to a blue color group. Further, the region where an X-coordinate is below that of the white point W and a Y-coordinate is above that of the white point W represents the region of colors belonging to a green color group and the region to the contrary represents the region of colors belonging to a red color group.

Figs. 7, 8, represent that the degree of color change depending on the viewing angle in the liquid crystal display device 1 is lower than or the same as that in the comparative example of the liquid crystal display device. From this it may be concluded that coloring due to the ununiform thicknesses of the liquid crystal layer 9 hardly occurs in the liquid crystal display device 1. Additionally, since the coloring degree can be reduced without employing a substrate having irregularities unlike a conventional liquid crystal display device, inferior orientation of liquid crystal molecules due to the irregularities can be eliminated. Furthermore, according to the invention, since a relatively expensive substrate such as ground glass is not needed, the liquid crystal display device with an improved display quality can be economically manufactured.

In the following, the embodiment of the invention will be described. The liquid crystal display device 1 of the above example is applied, for example, to display means of the equipment mounted on vehicles, which is often exposed to a relatively high temperature environment (e.g., above 45°C). The refractive anisotropy Δn of the liquid crystal molecules of the liquid crystal display device 1 depends on temperature. For example, the refractive anisotropy decreases with the increase of temperature. As a consequence, the product d·Δn is deviated from a value predetermined. That causes, for example, a reddish background color and degradation of display properties. The embodiment is directed to preventing the degradation of display properties due to the temperature changes. More specifically, according to the invention a pleochroic dye of between 0.4 and 0.8%, is added to the liquid crystal material to be used for the liquid crystal layer 9 of the liquid crystal display device 1. In the embodiment, a blue-type pleochroic dye of 0.6% was added, which is manufactured by Sumitomo Chemical Co., Ltd. under the tradename "CLD-506".

Azo- and anthraquinone dye molecules can be used as the blue-type pleochroic dye. In particular, the contrast ratio can be improved by using a pleochroic dye with a relatively high dichroism ratio. Although, in the embodiment, a pleochroic dye of only 0.6% is added for the purpose of reducing the manufacturing cost, the decline in image quality due to temperature changes is the least in the case of an addition of 0.8%.

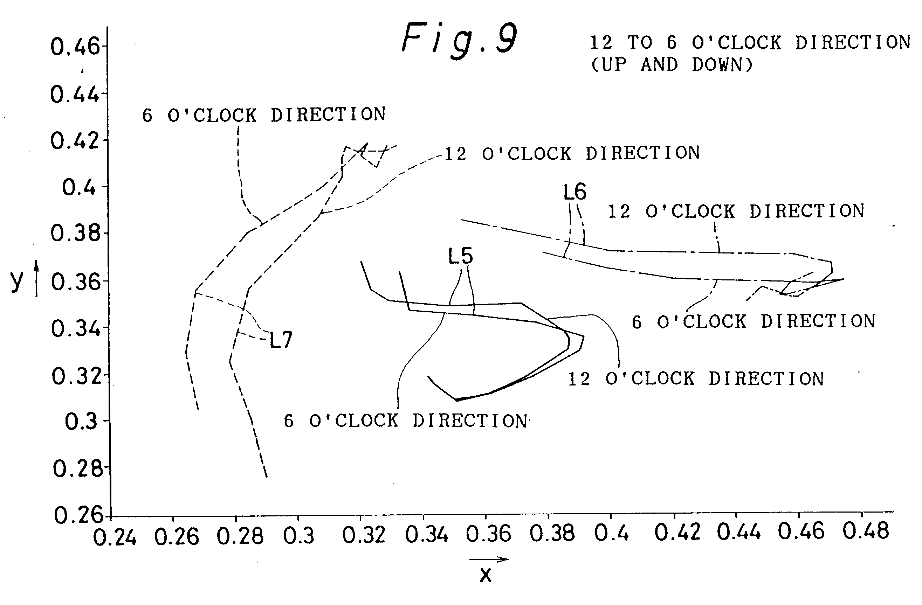

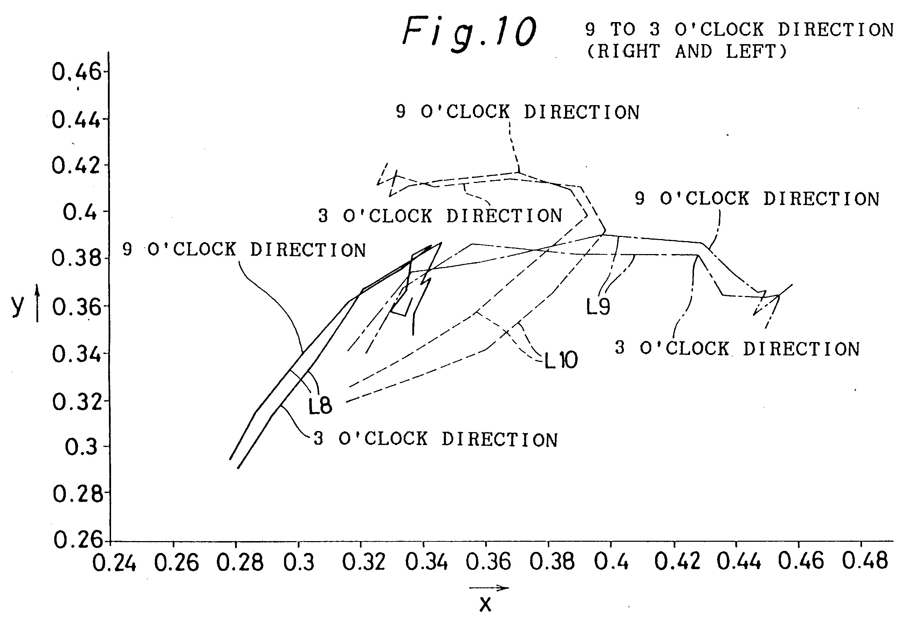

Fig. 9 is a chromaticity diagram in a direction of 12 to 6 o'clock of the embodiment of a liquid crystal display device, and Fig. 10 is that in a direction of 9 to 3 o'clock. The chromaticity diagrams are based on the evaluations in the environment of 65°C. Continuous lines L5, L8 represent the results of the embodiment, alternate long and short dash lines L6, L9 the results of the above device 1, and broken lines L7, L10 the results of the comparative example. Based on the results for the above device 1 shown by the alternate long and short dash lines L6, L9, it is proved that the display color thereof inclines to red in the use thereof in the environment of a relatively high temperature in both of the up and down and the right and left direction. On the other hand, the results for the comparative example using a substrate having irregularities shown by the broken lines L7, L10 prove that the display color thereof does not incline to red and the degree of the color change is low in both the directions.

The results for the embodiment shown by the continuous lines L5, L8 prove that the display color thereof changes almost the same as that of the comparative example and in particular it is not inclined to red even in the up and down direction where the inclination to red is generally caused.

As described above, it was demonstrated that it is possible to achieve a display having the same viewing angle properties as that of the conventional liquid crystal display device comprising a substrate having irregularities.

Thus, the blue-type pleochroic dye is added in order to eliminate the inclination of the display color to red in environment of a high temperature. The addition of a larger amount of dye molecules than that mentioned above, however, causes the decrease of light transmittance during voltage application. As a consequence, a display image with a high contrast can not be obtained and besides the manufacturing cost rises due to the increase of the material cost. Moreover, the effect of the invention can not be attained also in the case of a smaller addition amount than that mentioned above.

Fig. 11 is a chromaticity diagram for a liquid crystal display device with different addition amounts of pleochroic dye of a blue type. Continuous lines L11, L12, L13 show the results of liquid crystal display devices having an addition amount of 0.2, 0.6 and 1.0%, respectively. Further, continuous line L14 shows the result of the same liquid crystal display device as the comparative example in the above device 1. Moreover, points a, b, c show the results at environmental temperatures of 25, 45 and 65°C, respectively. All the results are based on θ =0.

It is found that a reddish color is observed in the case of L11 for an addition amount of 0.2% at a relatively high temperature, in comparison with the comparative example represented by the continuous line L14. It is assumed that the color becomes more reddish with an addition amount of 0.2% or less. In the case of L11 for an addition amount of 1.0%, it is found that the color is not an achromatic color because the result is relatively apart from the above-mentioned white point. The result will be further apart from the white point with an addition amount of 1.0% or more.

From the above, the addition amount of pleochroic dye molecules is preferably selected from values in the above-mentioned range of from 0.4 to 0.8%.

The invention may be embodied in other specific forms without departing from the essential characteristics thereof. The present embodiments is therefore to be considered in all respects as illustrative and not restrictive, the scope of the invention being defined by the appended claims rather than by the foregoing description and all changes which come within the meaning of the claims are therefore intended to be embraced therein.

## Claims

1. A liquid crystal display device (1) comprising:
first (10) and second (11) polarizing plates;
first (2) and second (3) light transmitting substrates disposed between the pair of polarizing plates (10,11); and
a liquid crystal layer (9) disposed between the pair of light transmitting substrates (2,3), the liquid crystal layer (9) composed of liquid crystal molecules having a twist orientation angle of 90° between the pair of light transmitting substrates (2,3),
wherein the angle α between the first orientation axis (P₁) of liquid crystal molecules being closest to the first light transmitting substrate (2) and the absorption axis (P₃) of the first polarizing plate (10) disposed on the side of the first light transmitting substrate (2) is set to be in the range of from -5 to 5°, and
the angle β between the second orientation axis (P₂) of liquid crystal molecules being closest to the second light transmitting substrate (3) and the absorption axis (P₄) of the second polarizing plate (11) disposed on the side of the second light transmitting substrate (3) is set to be in the range of from 85° to 95°,
**characterized in that**
a back light source with a tungsten lamp is provided on the side of the second polarizing plate (11) opposite to the second light transmitting substrate (3) to effect display of the liquid crystal display device (1), in that the product d·Δn of the liquid crystal layer thickness d and the refractive anisotropy Δn of the liquid crystal molecules is selected from values in the range of from 1.80 to 2.00 µm, and in that the liquid crystal layer (9) includes a blue-type pleochroic dye in an amount in the range of from 0.4 to 8% based on the total of the liquid crystal layer (9) so as to prevent the color of the display from changing to red at a raised ambient temperature of over 45°C.

2. The liquid crystal display device (1) according to claim 1, wherein the amount of the blue-type pleochroic dye is 0.8% based on the total of the liquid crystal layer (9).

3. The liquid crystal display device (1) according to claim 1, wherein the blue-type pleochroic dye is comprised of azo dye molecules.

4. The liquid crystal display device (1) according to claim 1, wherein the blue-type pleochroic dye is comprised of anthraquinone dye molecules.

5. The liquid crystal display device (1) according to claim 1, wherein the product d·Δn is selected from values in the range of from 1.85 to 1.95 µm.

6. The liquid crystal display device (1) according to claim 1, wherein the product d·Δn is 1.888 µm and the angles α, β are set to be 0° and 90°, respectively.

7. The liquid crystal display device (1) according to claim 1, wherein each of the pair of polarizing plates (10, 11) comprises a substrate containing a dyestuff adsorbed in said substrate.

## Patentansprüche

1. Flüssigkristall-Anzeigevorrichtung (1) mit:
- einer ersten (10) und einer zweiten (11) Polarisationsplatte;
- einem ersten (2) und einem zweiten (3) lichtdurchlässigen Substrat, die zwischen dem Paar von Polarisationsplatten (10, 11) angeordnet sind; und
- einer Flüssigkristallschicht (9), die zwischen dem Paar lichtdurchlässiger Substrate (2, 3) angeordnet ist und die aus Flüssigkristallmolekülen mit einem Verdrillungsausrichtungswinkel von 90° zwischen dem Paar lichtdurchlässiger Substrate (2, 3) besteht;
- wobei der Winkel α zwischen der ersten Ausrichtungsachse (P₁) der Flüssigkristallmoleküle, die am nächsten am ersten lichtdurchlässigen Substrat (2) liegen, und der Absorptionsachse (P₃) der ersten Polarisationsplatte (10), die auf der Seite des ersten lichtdurchlässigen Substrats (2) liegt, im Bereich von -5 bis 5° eingestellt ist; und
- wobei der Winkel β zwischen der zweiten Ausrichtungsachse (P₂) der Flüssigkristallmoleküle, die am nächsten am zweiten lichtdurchlässigen Substrat (3) liegen, und der Absorptionsachse (P₄) der zweiten Polarisationsplatte (11), die auf der Seite des zweiten lichtdurchlässigen Substrats (3) liegt, im Bereich von 85° bis 95° eingestellt ist;
**dadurch gekennzeichnet, dass**
- eine Hintergrundbeleuchtungs-Lichtquelle mit einer Wolframlampe auf der Seite der zweiten Polarisationsplatte (11), die vom zweiten lichtdurchlässigen Substrat (3) abgewandt ist, angeordnet ist, um einen Anzeigevorgang der Flüssigkristall-Anzeigevorrichtung (1) zu bewirken;
- das Produkt d·Δn aus der Dicke d der Flüssigkristallschicht und der Brechungsanisotropie Δn der Flüssigkristallmoleküle aus Werten im Bereich von 1,80 bis 2,00 µm ausgewählt ist; und
- die Flüssigkristallschicht (9) einen Pleochroitischen Farbstoff von blauem Typ mit einer Menge im Bereich von 0,4 bis 0,8% bezogen auf die Gesamtmenge der Flüssigkristallschicht (9) enthält, um zu verhindern, dass die Anzeigefarbe bei erhöhter Umgebungstemperatur von über 45°C auf rot wechselt.

2. Flüssigkristall-Anzeigevorrichtung (1) nach Anspruch 1, bei der die Menge des pleochroitischen Farbstoffs von blauem Typ 0,8% bezogen auf die Gesamtmenge der Flüssigkristallschicht (9) beträgt.

3. Flüssigkristall-Anzeigevorrichtung (1) nach Anspruch 1, bei der der pleochroitische Farbstoff von blauem Typ aus Azo-Farbstoffmolekülen besteht.

4. Flüssigkristall-Anzeigevorrichtung (1) nach Anspruch 1, bei der der pleochroitische Farbstoff von blauem Typ aus Antrachinon-Farbstoffmolekülen besteht.

5. Flüssigkristall-Anzeigevorrichtung (1) nach Anspruch 1, bei der das Produkt d·Δn aus Werten im Bereich 1,85 bis 1,95 µm ausgewählt ist.

6. Flüssigkristall-Anzeigevorrichtung (1) nach Anspruch 1, bei der das Produkt d·Δn den Wert 1,888 µm hat und die Winkel α, β auf 0° bzw. 90° eingestellt sind.

7. Flüssigkristall-Anzeigevorrichtung (1) nach Anspruch 1, bei der jedes Paar von Polarisationsplatten (10, 11) ein Substrat aufweist, das einen im Substrat adsorbierten Farbstoff enthält.

## Revendications

1. Dispositif d'affichage (1) à cristaux liquides, comprenant
une première (10) et une deuxième (11) plaques polarisantes;
un premier (2) et un deuxième (3) substrats laissant passer la lumière, disposés entre les plaques de la paire de plaques polarisantes (10,11); et
une couche (9) de cristaux liquides disposée entre les substrats de la paire de substrats (2,3) laissant passer la lumière, la couche (9) de cristaux liquides étant composée de molécules de cristaux liquides ayant un angle d'orientation en torsion de 90° entre les substrats de la paire de substrats (2,3) laissant passer la lumière,
dans lequel l'angle α entre le premier axe (P₁) d'orientation de molécules de cristaux liquides les plus proches du premier substrat (2) laissant passer la lumière et l'axe d'absorption (P₃) de la première plaque polarisante (10) disposée du côté du premier substrat (2) laissant passer la lumière est établi de façon à être compris entre -5 et 5°, et
l'angle β entre le deuxième axe (P₂) d'orientation de molécules de cristaux liquides les plus proches du deuxième substrat (3) laissant passer la lumière et l'axe d'absorption (P₄) de la deuxième plaque polarisante (11) disposée du côté du deuxième substrat (3) laissant passer la lumière est établi de façon à être compris entre 85° et 95°,
**caractérisé en ce que**
une source de lumière noire comportant une lampe à incandescence est disposée du côté de la deuxième plaque polarisante (11) opposée au deuxième substrat (3) laissant passer la lumière pour obtenir un affichage par le dispositif d'affichage (1) à cristaux liquides, en ce que le produit d.Δn de l'épaisseur d de la couche de cristaux liquides et de l'anisotropie de réfraction Δn des molécules de cristaux liquides est choisi parmi des valeurs comprises entre 1,80 et 2,00 µm, et en ce que la couche (9) de cristaux liquides comporte une quantité d'un colorant pléochroïque de type bleu comprise entre 0,4 et 0,8% du total de la couche (9) de cristaux liquides afin d'empêcher la couleur de l'affichage de virer au rouge à une température ambiante ayant augmenté jusqu'à plus de 45°C.

2. Dispositif d'affichage (1) à cristaux liquides selon la revendication 1, dans lequel la quantité de colorant pléochroïque de type bleu est de 0,8% du total de la couche (9) de cristaux liquides.

3. Dispositif d'affichage (1) à cristaux liquides selon la revendication 1, dans lequel le colorant pléochroïque de type bleu est constitué par des molécules de colorant azoïque.

4. Dispositif d'affichage (1) à cristaux liquides selon la revendication 1, dans lequel le colorant pléochroïque de type bleu est constitué par des molécules de bleu d'anthraquinone.

5. Dispositif d'affichage (1) à cristaux liquides selon la revendication 1, dans lequel le produit d.Δn est choisi par des valeurs comprises entre 1,85 et 1,95 µm.

6. Dispositif d'affichage (1) à cristaux liquides selon la revendication 1, dans lequel le produit d.Δn est de 1,888 µm et les angles α, β sont établis respectivement à 0° et 90°.

7. Dispositif d'affichage (1) à cristaux liquides selon la revendication 1, dans lequel chaque plaque de la paire de plaques polarisantes (10, 11) comporte un substrat contenant une matière colorante adsorbée dans ledit substrat.
